# EUROPÄISCHE PATENTANMELDUNG

(11) **EP 4 696 587 A1**
(43) Veröffentlichungstag der Anmeldung: **18.02.2026**
(21) Anmeldenummer: 25192838.8
(22) Anmeldetag: 30.07.2025
(51) Int. Cl.: B62D 5/04, B66F 9/075

(54) **ELEKTRISCHE LENKUNG FÜR EIN FLURFÖRDERZEUG**

(30) Priorität: 14.08.2024 DE 102024123247
(71) Anmelder: STILL GmbH, 22113 Hamburg (DE)
(72) Erfinder: Becker, Martin, 22589 Hamburg (DE); Schmidt, Niels, 22885 Barsbüttel (DE); Osper, Gerald, 22147 Hamburg (DE); Wolff, Christian, 22967 Tremsbüttel (DE); Biederer, Sven, 21643 Beckdorf (DE)
(74) Vertreter: Patentship Patentanwaltgesellschaft

(57) **Zusammenfassung**

Die Erfindung betrifft eine elektrische Lenkung (1) für ein Flurförderzeug, wobei die elektrische Lenkung (1) einen elektrischen Lenkmotor (2) und eine den elektrischen Lenkmotor (2) ansteuernde Steuerelektronik (15) aufweist, wobei die Steuerelektronik (15) eine Leiterplatte (40) umfasst. Die Leiterplatte (40) der Steuerelektronik (15) ist mit einem elektronischen Lenkschütz (60) versehen.

## Beschreibung

Die Erfindung betrifft eine elektrische Lenkung für ein Flurförderzeug, wobei die elektrische Lenkung einen elektrischen Lenkmotor und eine den elektrischen Lenkmotor ansteuernde Steuerelektronik aufweist, wobei die Steuerelektronik eine Leiterplatte umfasst.

Die Erfindung betrifft weiterhin ein Flurförderzeug mit einer derartigen elektrischen Lenkungseinrichtung.

Bei Flurförderzeugen, insbesondere Lagertechnikflurförderzeugen, beispielsweise Hubwagen, Kommissionierern, Schubmaststaplern oder Schleppern, ist es bekannt eine elektrische Lenkung einzusetzen, die einen elektrischen Lenkmotor aufweist, der unter Zwischenschaltung eines Lenkuntersetzungsgetriebe ein gelenktes Rad um eine Lenkachse lenkt. Derartige elektrische Lenkungen sind als Steer-by-Wire-Lenkungen ausgebildet, die keine mechanische Verbindung zwischen einem Lenkgeber, beispielsweise einer Lenkdeichsel oder einem Lenkrad oder einem Lenker, und dem gelenkten Rad aufweisen. Zur Steuerung des Lenkmotors ist eine Steuerelektronik vorgesehen. Der Steuerelektronik wird mittels eines Sensors am Lenkgeber eine Soll-Drehstellung (Soll-Lenkwinkel) des gelenkten Rades zugeführt und erfasst mittels eines Lenkwinkelsensors die Ist-Drehstellung (Ist-Lenkwinkel) und somit die absolute Position des gelenkten Rades um die Lenkachse. Die Steuerelektronik steuert bzw. regelt den Lenkmotor derart, dass die Ist-Drehstellung des gelenkten Rades der am Lenkgeber vorgegebenen gewünschten Soll-Drehstellung des gelenkten Rades entspricht. Die Steuerelektronik der elektrischen Lenkungseinrichtung ist zur Stromversorgung eingangsseitig mittels Stromversorgungsleitungen mit einer elektrischen Energiequelle des Flurförderzeugs, beispielsweise einer Traktionsbatterie, verbunden und steht ausgangsseitig mit dem elektrischen Lenkmotor zu dessen Ansteuerung und Stromversorgung in Verbindung.

Zum Schutz und Spannungs-Freischalten der elektrischen Lenkung ist als Sicherungs- und Schutzeinrichtung ein Lenkschütz erforderlich. Bei bekannten elektrischen Lenkungen ist das Lenkschütz als separates und von der Steuerelektronik räumlich getrenntes und somit externes Schaltschütz ausgebildet, das von einer Steuerelektronik, beispielsweise der Steuerelektronik der elektrischen Lenkung, angesteuert ist. Das als Schaltschütz ausgebildete Lenkschütz ist als elektrisch oder elektromechanisch betätigtes Relais für große elektrische Leistungen ausgebildet und in einer der Stromversorgungsleitungen angeordnet, die von der elektrischen Energiequelle des Flurförderzeugs zu der Steuerelektronik der elektrischen Lenkung geführt sind.

Bei bekannten elektrischen Lenkungen ist nachteilig, dass das von der Steuerelektronik räumlich getrennte und somit externe Relais hohe Herstellkosten aufweist, zusätzlichen Bauraum im Flurförderzeug benötigt und zur Ansteuerung mit der Steuerelektronik der elektrischen Lenkung mittels einer Verkabelung und entsprechenden Steckkontaktstellen verkabelt werden muss. Diese Verkabelung birgt die Gefahr von Fehlern in den Steckkontaktstellen und die Gefahr von Störungen. Weiterhin birgt die Ausführung des Lenkschütz als elektromechanisch betätigtes Relais die Gefahr mechanischer Ausfälle des Lenkschütz.

Der vorliegenden Erfindung liegt die Aufgabe zugrunde, eine elektrische Lenkung der eingangs genannten Gattung zur Verfügung zu stellen, die hinsichtlich einer oder mehrerer der genannten Nachteile verbessert ist.

Diese Aufgabe wird erfindungsgemäß dadurch gelöst, dass die Leiterplatte der Steuerelektronik mit einem elektronischen Lenkschütz versehen ist.

Bei der erfindungsgemäßen elektrischen Lenkung ist das Lenkschütz als elektronisches Lenkschütz ausgebildet, das auf der Leiterplatte angeordnet ist und somit in der Leiterplatte der den Lenkmotor ansteuernden Steuerelektronik integriert ist. Gegenüber einem externen Relais als Lenkschütz des Standes der Technik weist das an der Leiterplatte der den Lenkmotor ansteuernden Steuerelektronik integrierte elektronische Lenkschütz einen geringen Bauraumbedarf auf und erfordert keine Verkabelung mit der Steuerelektronik. Weiterhin weist ein elektronisches Lenkschütz keine Gefahr von mechanischen Ausfällen wie ein elektromechanisch betätigtes Relais auf.

Gemäß einer vorteilhaften Ausgestaltungsform der Erfindung umfasst das elektronische Lenkschütz mindestens einen auf der Leiterplatte angeordneten Leistungs-Halbleiterschalter, insbesondere einen MOSFET oder einen IGBT oder ein bipolares Bauelement. Bei der erfindungsgemäßen elektrischen Lenkung wird somit ein externes Relais, beispielsweise ein elektromechanisch betätigtes Relais, als Lenkschütz, durch einen oder mehrere auf der Leiterplatte der den Lenkmotor ansteuernden Steuerelektronik angeordneten Leistungs-Halbleiterschalter als elektronisches Lenkschütz ersetzt. Ein derartiger Leistungs-Halbleiterschalter als Lenkschütz weist im Gegensatz zu einem elektromechanisch betätigten Relais als Lenkschütz keine Gefahr von mechanischen Ausfällen und einen geringen Herstellaufwand auf.

Vorzugsweise ist der Leistungs-Halbleiterschalter als Feldeffekttransistor, insbesondere als Metall-Oxid-Halbleiter-Feldeffekttransistor (MOSFET), ausgebildet. Ein MOSFET ist ein aktives Bauelement mit mindestens drei Anschlüssen (Elektroden): G (englisch: gate, deutsch: Steuerelektrode), D (englisch: drain, deutsch: Abfluss) und S (englisch: source, deutsch: Quelle). Die Ansteuerung eines MOSFETs erfolgt über eine Steuerspannung (Gate-Source-Spannung) bzw. ein Steuerpotential (Gate-Potential). Damit kann der Stromfluss von Drain nach Source beeinflusst werden.

Gemäß einer vorteilhaften Ausgestaltungsform der Erfindung ist der mindestens eine Leistungs-Halbleiterschalter in einen Hauptstromleiter der Leiterplatte eingeschaltet. Hierdurch kann mit dem Leistungs-Halbleiterschalter in einfacher Weise die Funktion eines Lenkschütz zum Schutz und Spannungs-Freischalten der elektrischen Lenkung erzielt werden. Als ein Hauptstromleiter der Leiterplatte der den Lenkmotor ansteuernden Steuerelektronik ist insbesondere eine stromführende Leiterbahn der Leiterplatte zu verstehen, die direkt mit der elektrischen Energiequelle des Flurförderzeugs verbunden ist und in der die von der elektrischen Energiequelle des Flurförderzeugs bereitgestellte elektrische Energie ansteht.

Gemäß einer vorteilhaften Ausgestaltungsform der Erfindung ist eine auf der Leiterplatte angeordnete elektronische Steuerungseinrichtung vorgesehen, die dazu eingerichtet ist, den Leistungs-Halbleiterschalter in einen, den Stromfluss in dem Hauptstromleiter sperrenden Zustand oder den Leistungs-Halbleiterschalter in einen, den Stromfluss in dem Hauptstromleiter freigebenden Zustand zu schalten. Das elektronische Lenkschütz umfasst somit den auf der Leiterplatte angeordneten Leistungs-Halbleiterschalter und die auf der Leiterplatte angeordnete elektronische Steuerungseinrichtung, die den Leistungs-Halbleiterschalter ansteuert. Bei der erfindungsgemäßen elektronischen Lenkung wird somit ein externes Relais als Lenkschütz durch mindestes einen Leistungs-MOSFET mit zugehöriger Beschaltung und Steuerung auf der Leiterplatte der elektrischen Lenkung ersetzt.

Beispielsweise kann das elektronische Lenkschütz mindestens eine auf der Leiterplatte angeordnete, die Stromstärke und/oder Temperatur des Hauptstromleiters messende Strom- und/oder Temperatursensorik und die auf der Leiterplatte angeordnete elektronische Steuerungseinrichtung umfassen, wobei der mindestens eine Leistungs-Halbleiterschalter und die Strom- und/oder Temperatursensorik mit der Steuerungseinrichtung in Wirkverbindung stehen und die Steuerungseinrichtung dazu eingerichtet ist, bei einer Überschreitung einer vorgegebenen Stromstärke und/oder Temperatur den Leistungs-Halbleiterschalter in einen, den Stromfluss in dem Hauptstromleiter sperrenden Zustand zu schalten.

Gemäß einer vorteilhaften Ausgestaltungsform der Erfindung ist die Leiterplatte mit einem den Lenkmotor ansteuernden Umrichter und/oder einer Zwischenkreiskondensatoreinrichtung versehen. Eine derartige Leiterplatte, die mit dem Umrichter des Lenkmotors und/oder einer Zwischenkreiskondensatoreinrichtung versehen ist, bildet eine Hauptleiterplatte, die den elektrischen Lenkmotor ansteuert. Bei der erfindungsgemäßen elektronischen Lenkung wird somit ein externes Relais als Lenkschütz durch mindestens einen Leistungs-MOSFET mit zugehöriger Beschaltung und Steuerung auf der Hauptleiterplatte der elektrischen Lenkung ersetzt.

Die Erfindung betrifft weiterhin ein Flurförderzeug mit einer erfindungsgemäßen elektrischen Lenkung.

Die Erfindung weist eine Reihe von Vorteilen auf.

Mit der Erfindung wird ein auf der Leiterplatte der den Lenkmotor ansteuernden Steuerelektronik integriertes elektronisches Lenkschütz einer elektrischen Lenkung eines Flurförderzeugs bereitgestellt.

Bei der erfindungsgemäßen elektrische Lenkung ist ein externes elektromechanisches Relais als Lenkschütz einer elektrischen Lenkung des Standes der Technik durch mindestens einen auf der Leiterplatte der den Lenkmotor ansteuernden Steuerelektronik angeordneten und somit integrierten Leistungs-Halbleiterschalter als elektronisches Lenkschütz ersetzt. Dadurch entfällt das aufwändige externe elektromechanische Relais und die zugehörige Verkabelung mit zusätzlichen Steckkontaktstellen.

Bei der erfindungsgemäßen Lenkung gibt es durch die Ausführung des Lenkschütz als Leistungs-Halbleiterschaltelement keine mechanischen Ausfälle des Lenkschütz mehr.

Durch den Entfall der Verkabelung und entsprechender Steckkontaktverbindungen ist die Funktion des Lenkschütz bei der erfindungsgemäßen elektrischen Lenkung deutlich robuster.

Durch den Entfall der Verkabelung und der Ausbildung des Lenkschütz als Leistungs-Halbleiterschalter weist die erfindungsgemäße elektrische Lenkung weiterhin einen geringen Bauraumbedarf und verringerte Herstellkosten auf.

Weitere Vorteile und Einzelheiten der Erfindung werden anhand des in den schematischen Figuren dargestellten Ausführungsbeispiels näher erläutert. Hierbei zeigt
- Figur 1: eine erfindungsgemäße elektrische Lenkung in einer schematischen Darstellung und
- Figur 2: eine schematische Darstellung einer den Lenkmotor ansteuernden Leiterplatte der erfindungsgemäßen elektrischen Lenkung.

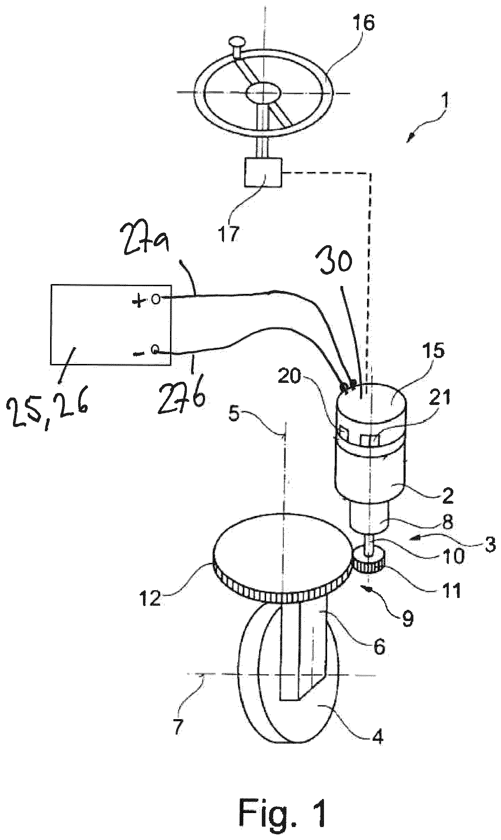

In der Figur 1 ist eine erfindungsgemäße, als Steer-by-Wire-Lenkung ausgebildete elektrische Lenkung 1 für ein Flurförderzeug dargestellt.

Die elektrische Lenkung 1 weist einen elektrischen Lenkmotor 2 auf, der unter Zwischenschaltung eines Lenkuntersetzungsgetriebes 3 ein gelenktes Rad 4 des Flurförderzeugs um eine Lenkachse 5 dreht und somit lenkt.

Im dargestellten Ausführungsbeispiel ist das gelenkte Rad 4 an einem Drehschemel 6 um eine Drehachse 7 drehbar angeordnet, wobei der Drehschemel 6 um die Lenkachse 5, die bevorzugt vertikal angeordnet ist, drehbar angeordnet ist.

Im dargestellten Ausführungsbeispiel umfasst das Lenkuntersetzungsgetriebe 3 ein vom Lenkmotor 2 angetriebenes Untersetzungsgetriebe 8 und eine Getriebestufe 9. Das Untersetzungsgetriebe 8 ist von einer in der Figur 1 nicht näher dargestellten Motorabtriebswelle, die um eine Drehachse D drehbar angeordnet ist, des Lenkmotors 2 angetrieben und weist eine Abtriebswelle 10 auf, die mit einem Antriebsritzel 11 versehen ist. Die Getriebestufe 9 ist im dargestellten Ausführungsbeispiel als Zahnradgetriebe ausgebildet, das von dem Antriebsritzel 11 und einem an dem Drehschemel 6 angeordneten Zahnrad 12 gebildet ist, mit dem das Antriebsritzel 11 in Zahneingriff steht. Alternativ kann die Getriebestufe 9 als Kettengetriebe oder Riemengetriebe oder als Lineargetriebe ausgebildet sein.

Zur Ansteuerung des Lenkmotors 2 ist eine Steuerelektronik 15 vorgesehen. Die Steuerelektronik 15 steht beispielsweise mit einem an einem Lenkgeber 16, beispielsweise einem Lenkrad, angeordneten Sensor 17 in Verbindung, der ausgebildet ist, bei einer Betätigung des Lenkgebers 17 eine Soll-Drehstellung (Soll-Lenkwinkel) für das gelenkte Rad 4 zu erfassen. Die Steuerelektronik 15 steht weiterhin beispielsweise mit einem Lenkwinkelsensor 20 in Verbindung, der ausgebildet ist, die Ist-Drehstellung (Ist-Lenkwinkel) und somit die absolute Position des gelenktes Rades 4 um die Lenkachse 5 zu erfassen. Weiterhin kann die Steuereinrichtung 15 mit einem Drehzahlsensor 21 in Verbindung stehen, der ausgebildet ist, die Drehzahl und/oder die Drehrichtung der Motorabtriebswelle des Lenkmotors 2 zu erfassen. Die Steuerelektronik 15 steuert bzw. regelt den Lenkmotor 2 beispielsweise derart, dass die Ist-Drehstellung des gelenktes Rades 4 der am Lenkgeber 16 vorgegebenen gewünschten Soll-Drehstellung des gelenktes Rades 4 entspricht.

Die Steuerelektronik 15 ist zur Versorgung mit elektrischer Energie mit einer elektrischen Energiequelle 25 des Flurförderzeugs, beispielsweise einer Traktionsbatterie 26, verbunden, beispielsweise mittels entsprechender Verbindungskabel 27a, 27b.

Die Steuerelektronik 15 umfasst ein Gehäuse 30, das an dem Lenkmotor 2 angebaut ist. Im dargestellten Ausführungsbeispiel ist das Gehäuse 30 der Steuerelektronik 15 an der Oberseite des Lenkmotors 2 angebaut und orthogonal zur Motorachse des Lenkmotors 2 oberhalb des Lenkmotors 2 angeordnet.

Die den Lenkmotor 2 ansteuernde Steuerelektronik 15 weist eine in der Figur 1 nicht näher dargestellte Leiterplatte 40 auf, die in dem Gehäuse 30 eingebaut ist.

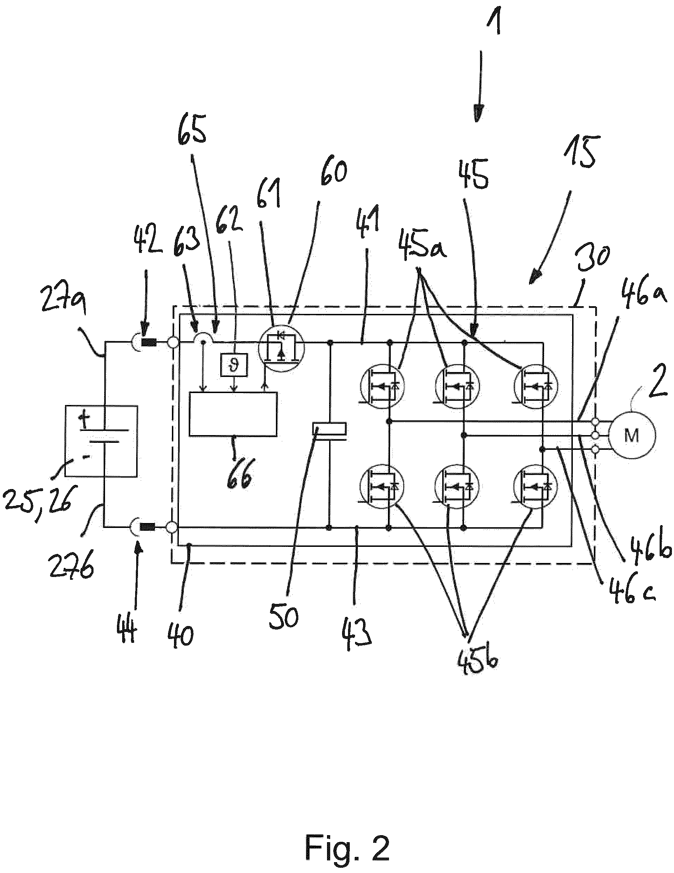

In der Figur 2 ist die Leiterplatte 40 und deren Aufbau schematisch dargestellt.

In der Figur 2 ist das Gehäuse 30 der den Lenkmotor 2 ansteuernde Steuerelektronik 15 und die in dem Gehäuse 30 angeordnete Leiterplatte 40 der Steuerelektronik 15 dargestellt.

Die Leiterplatte 40 ist mit einem Hauptstromleiter 41 versehen, der über einen Steckerkontakt 42 mit der Verbindungsleitung 27a verbunden ist, die mit der elektrischen Energiequelle 25 des Flurförderzeugs in Verbindung steht. Die Leiterplatte 40 ist mit einem weiteren Hauptstromleiter 43 versehen, der über einen Steckerkontakt 44 mit der Verbindungsleitung 27b verbunden ist, die mit der elektrischen Energiequelle 25 des Flurförderzeugs in Verbindung steht.

Die Hauptstromleiter 41, 43 sind von entsprechenden Leiterbahnen an der Leiterplatte 40 gebildet.

Die Leiterplatte 40 ist mit einem den Lenkmotor 2 ansteuernden Umrichter 45 versehen. Der Umrichter 45 weist mehrere Halbleiter-Schalterelemente 45a auf, die mit dem Hauptstromleiter 41 verbunden sind, und mehrere Halbleiter-Schalterelemente 45b auf, die mit dem Hauptstromleiter 43 verbunden sind. Jeweils ein Halbleiter-Schalterelemente 45a und ein Halbleiter-Schalterelemente 45b steuern eine Motorphase 46a bzw. 46b bzw. 46c des elektrischen Lenkmotors 2 an.

Die Leiterplatte 40 ist weiterhin mit einer Zwischenkreiskondensatoreinrichtung 50 versehen, die mit dem Hauptstromleiter 41 und dem Hauptstromleiter 43 verbunden ist.

Die mit den Hauptstromleitern 41, 43, die mit der der elektrischen Energiequelle 25 des Flurförderzeugs in Verbindung stehen, dem Umrichter 45 und der Zwischenkreiskondensatoreinrichtung 50 versehene Leiterplatte 40 stellt somit eine den elektrischen Lenkmotor 2 ansteuernde Hauptleiterplatte dar.

Die Leiterplatte 40 der den elektrischen Lenkmotor 2 ansteuernden Steuerelektronik 15 ist mit einem elektronischen Lenkschütz 60 versehen. Im dargestellten Ausführungsbeispiel ist das elektronischen Lenkschütz 60 dem Hauptstromleiter 41 zugeordnet.

Das elektronische Lenkschütz 60 umfasst mindestens einen auf der Leiterplatte 40 angeordneten Leistungs-Halbleiterschalter 61. Der Leistungs-Halbleiterschalter 61 ist im dargestellten Ausführungsbeispiel als MOSFET, insbesondere Leistungs-MOSFET, oder IGBT ausgebildet. Im dargestellten Ausführungsbeispiel ist der Leistungs-Halbleiterschalter 61 in den Hauptstromleiter 41 eingeschaltet.

Das elektronische Lenkschütz 60 umfasst eine auf der Leiterplatte 40 angeordnete elektronische Steuerungseinrichtung 66, die mit dem Leistungs-Halbleiterschalter 61 in Verbindung steht und dazu eingerichtet ist, den Leistungs-Halbleiterschalter 61 in einen, den Stromfluss in dem Hauptstromleiter 41 sperrenden Zustand oder in einen den Leistungs-Halbleiterschalter 61 in einen, den Stromfluss in dem Hauptstromleiter 41 freigebenden Zustand zu schalten.

Die elektronische Steuerungseinrichtung 66 kann weiterhin eine die Stromstärke und/oder Temperatur des Hauptstromleiters 41 messende Strom- und/oder Temperatursensorik 65 umfassen, die einen auf der Leiterplatte 40 angeordneten Temperatursensor 62 und einen auf der Leiterplatte 40 angeordneten Stromsensor 63 umfasst.

Der Temperatursensor 62 und/oder der Stromsensor 63 stehen mit der elektronischen Steuerungseinrichtung 66 in Verbindung, die auf der Leiterplatte 40 angeordnet ist.

Der Temperatursensor 62 misst die Temperatur in dem Hauptstromleiter 41. Zusätzlich oder alternativ misst der Stromsensor 63 die Stromstärke in dem Hauptstromleiter 41. Die Messwerte werden an die elektronische Steuerungseinrichtung 66 weitergegeben und dort ausgewertet. Bei Überschreitung vorgegebener Grenzwerte bezüglich der Temperatur und/oder der Stromstärke wird der Leistungs-Halbleiterschalter 61 in einen, den Stromfluss in dem Hautstromleiter 41 sperrenden Zustand geschaltet.

Die Verbindungen der elektronischen Steuerungseinrichtung 66 mit dem Leistungs-Halbleiterschalter 61, dem Stromsensor 63 und dem Temperatursensor 62 sind von entsprechenden Leiterbahnen an der Leiterplatte 40 gebildet.

Alternativ oder zusätzlich kann das elektronischen Lenkschütz 60 dem Hauptstromleiter 43 zugeordnet sein, wobei der Leistungs-Halbleiterschalter 61 in den Hauptstromleiter 43 eingeschaltet ist und der Temperatursensor 62 die Temperatur in dem Hauptstromleiter 43 und der Stromsensor 63 die Stromstärke in dem Hauptstromleiter 43 messen.

## Patentansprüche

1. Elektrische Lenkung (1) für ein Flurförderzeug, wobei die elektrische Lenkung (1) einen elektrischen Lenkmotor (2) und eine den elektrischen Lenkmotor (2) ansteuernde Steuerelektronik (15) aufweist, wobei die Steuerelektronik (15) eine Leiterplatte (40) umfasst, **dadurch gekennzeichnet, dass** die Leiterplatte (40) der Steuerelektronik (15) mit einem elektronischen Lenkschütz (60) versehen ist.

2. Elektrische Lenkung nach Anspruch 1, **dadurch gekennzeichnet, dass** das elektronische Lenkschütz (60) mindestens einen auf der Leiterplatte (40) angeordneten Leistungs-Halbleiterschalter (61) umfasst.

3. Elektrische Lenkung nach Anspruch 2, **dadurch gekennzeichnet, dass** der Leistungs-Halbleiterschalter (61) als MOSFET oder als IGBT oder als bipolares Bauelement ausgebildet ist.

4. Elektrische Lenkung nach Anspruch 2 oder 3, **dadurch gekennzeichnet, dass** der mindestens eine Leistungs-Halbleiterschalter (61) in einen Hauptstromleiter (41; 43) der Leiterplatte (43) eingeschaltet ist.

5. Elektrische Lenkung nach eine der Ansprüche 2 bis 4, **dadurch gekennzeichnet, dass** eine auf der Leiterplatte (40) angeordnete elektronische Steuerungseinrichtung (66) vorgesehen ist, die dazu eingerichtet ist, den Leistungs-Halbleiterschalter (61) in einen, den Stromfluss in dem Hauptstromleiter (41; 43) sperrenden Zustand oder den Leistungs-Halbleiterschalter (61) in einen, den Stromfluss in dem Hauptstromleiter (41; 43) freigebenden Zustand zu schalten.

6. Elektrische Lenkung nach einem der Ansprüche 1 bis 5, **dadurch gekennzeichnet, dass** die Leiterplatte (40) mit einem den Lenkmotor (2) ansteuernden Umrichter (45) und/oder einer Zwischenkreiskondensatoreinrichtung (50) versehen ist.

7. Flurförderzeug mit einer elektrischen Lenkung (1) nach einem der vorangegangenen Ansprüche.
